# FASCICULE DE BREVET EUROPEEN

(11) **EP 2 510 038 B1**
(45) Date de publication et mention de la délivrance du brevet: **09.05.2018**
(21) Numéro de dépôt: 10807458.4
(22) Date de dépôt: 07.12.2010
(51) Int. Cl.: C08G 63/08, C08G 63/64, C08G 63/82, C08G 63/91

(54) **PROCÈDE DE PRÉPARATION D'UN POLYMÈRE D'AU MOINS UN MONOMÈRE CYCLIQUE**
VERFAHREN ZUR HERSTELLUNG EINES POLYMERS AUS MINDESTENS EINEM CYCLISCHEN MONOMER
METHOD FOR PREPARING A POLYMER FROM AT LEAST ONE CYCLIC MONOMER

(30) Priorité: 08.12.2009 FR 0958742
(43) Date de publication de la demande: 17.10.2012
(73) Titulaire: Arkema France, 92700 Colombes (FR); Centre National de la Recherche Scientifique, 75016 Paris (FR)
(72) Inventeur: NAVARRO, Christophe, 64100 Bayonne (FR); DELCROIX, Damien, F-82100 Castelsarrasin (FR); MARTIN-VACA, Blanca, F-31100 Toulouse (FR); BOURISSOU, Didier, F-31830 Plaisance Du Touch (FR)
(74) Mandataire: Schaefer, Anne-Sophie
(86) Numéro de dépôt international: PCT/FR2010/052624
(87) Numéro de publication internationale: WO 2011/070282

(56) Documents cités:
- EP-A1- 1 972 649
- EP-A1- 2 028 209
- WO-A1-95/18170
- JP-A- 2006 274 253
- US-A- 3 476 715

## Description

La présente invention concerne un procédé de préparation de (co)polymères d'au moins un monomère cyclique choisi parmi les lactones, par ouverture de cycle catalysé par un composé phosphoré substitué, en présence éventuellement d'un amorceur portant une fonction hydroxyle ou thiol, ainsi que les compositions ainsi obtenues et leur utilisation.

Généralement, les procédés de polymérisation par ouverture de cycle utilisent des composés de type métalliques qui sont susceptibles de poser des problèmes de pollution ou de compatibilité avec le contact alimentaire ou avec les tissus vivants. D'autres procédés utilisent des acides qui sont corrosifs dans les procédés de fabrication.

Les (co)polymères de lactones telles que l'ε-caprolactone sont des polymères présentant un intérêt industriel certain dans divers domaines, en raison notamment de leur biocompatibilité, de leurs propriétés physico-chimiques et de leur bonne stabilité thermique jusqu'à des températures d'au moins 200-250°C.

Un procédé de préparation de ces copolymères a notamment été décrit par Jérome et al. dans Macromol, 2002, 35, 1190-1195. Il consiste à copolymériser la δ-valérolactone avec un macroamorceur qui est le poly(éthylène glycol) ou le monométhoxypoly(éthylène glycol), en présence d'acide chlorhydrique éthéré (HCl•Et₂O) dans le dichlorométhane à 0°C. Ce procédé utilise une concentration en monomère de 3 mol.l⁻¹, 3 équivalents d'acide par rapport aux fonctions hydroxyles du macroamorceur, et les polymères diblocs et triblocs obtenus après 2-3 h présentent des masses moléculaires en nombre maximales Mₙ de 9.500 à 19.000 g/mol, avec un indice de polydispersité de 1,07 à 1,09.

Ce procédé nécessite de mettre en oeuvre une quantité d'acide, par ailleurs corrosif, relativement élevée, qui peut altérer les appareillages utilisés. Par ailleurs la présence d'un amorceur est bénéfique pour un contrôle des masses des polymères.

D'autres procédés de copolymérisation cationique d'ε-caprolactone ont été proposés, qui font intervenir un acide sulfonique comme catalyseur au lieu de l'acide chlorhydrique. Dans ces procédés, la présence d'un amorceur est également nécessaire.

Un tel procédé a notamment été décrit par Maigorzata Basko et al. dans Journal of Polymer Science : Part A : Polymer Chemistry, Vol. 44, 7071-7081 (2006). Il consiste à faire réagir l'ε-caprolactone et éventuellement le L,L-lactide en présence d'alcool isopropylique et d'acide trifluorométhanesulfonique (triflique), dans le dichlorométhane à 35°C. Des copolymères de caprolactone ayant une masse moléculaire en nombre Mₙ allant de 4.780 à 5.900 g.mol et un indice de polydispersité de 1,21 à 1,24 peuvent ainsi être obtenus.
EP1972649 décrit dans les exemples un système catalytique utilisant du diméthyle phosphate mais a systématiquement recours à un catalyseur à base de métal (octanoate d'étain).

JP 2006 2006 274253 utilise également des composés phosphorés mais ces composés sont utilisés en combinaison avec des espèces métalliques et agissent en tant qu'accélérateur de la cinétique

Il n'est toutefois pas suggéré qu'un procédé des types décrits ci-dessus puisse être utilisé pour préparer dans des conditions généralement douces et avec une cinétique de réaction rapide des copolymères de lactones en présence d'un composé phosphoré substitué, avec éventuellement un amorceur portant au moins une fonction hydroxyle ou thiol, les copolymères obtenus pouvant présenter une masse moléculaire en nombre Mₙ élevée (éventuellement supérieure à 25.000 g/mol), un faible indice de polydispersité (inférieur ou égal à 1,5) et des enchaînements stéréocontrôlés. Un système catalytique mettant en jeu ce type de composés phosphorés substitués à l'avantage d'éviter l'utilisation de composés métalliques ou fortement acides. Il permet en outre d'accéder à des enchaînements stéréocontrollés.

La présente invention a ainsi pour objet un procédé de préparation d'un polymère ou d'un copolymère d'au moins un monomère cyclique choisi parmi les lactones, comprenant l'étape consistant à faire réagir le ou les monomère (s) cyclique (s) en présence d'un composé phosphoré substitué, et éventuellement au moins un amorceur portant une fonction hydroxyle ou thiol. Ce procédé est qualifié de « doux » car les conditions de température en particulier autorisent une polymérisation dès la température ambiante, n'utilisant pas de métaux et une grande variété de solvants peut être utilisée, en particulier les solvants non chlorés.

L'invention a également pour objet une composition de polymère susceptible d'être obtenue suivant le procédé ci-dessus et qui sera maintenant décrit plus en détail ainsi que les utilisations de ces compositions.

Le procédé selon l'invention peut être qualifié d'organo-catalytique.

En préambule, il est précisé que l'expression « compris(e) entre » utilisée dans le cadre de cette description doit s'entendre comme incluant les bornes citées.

Le procédé selon l'invention concerne la préparation d'un polymère ou copolymère d'au moins une lactone, comprenant l'étape consistant à faire réagir le ou les lactones en présence d'un composé phosphoré substitué.

Selon une deuxième forme de l'invention, le procédé selon l'invention concerne la préparation d'un polymère ou copolymère d'au moins un monomère cyclique choisi parmi les lactones, comprenant l'étape consistant à faire réagir ledit monomère cyclique en présence d'un composé phosphoré substitué, en présence d'au moins un amorceur portant une fonction hydroxy ou thiol.

Par « copolymère », on entend en particulier un polymère dérivé d'au moins deux espèces différentes de monomères, choisi parmi les lactones, (ci-après plus simplement désignées par « monomère cyclique »).

Lorsqu'un amorceur est présent, il sera intégré à la chaîne macromoléculaire. L'amorceur peut tout à fait être une petite molécule, comme l'eau, le pentanol. Il peut également être un oligomère ou un polymère, ainsi le produit de la réaction avec les monomères cycliques sera un copolymère à blocs.

Par lactone, on entend des monomères répondant à la formule suivants : 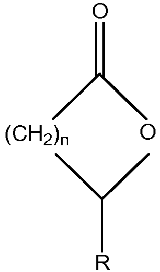 où n est un nombre entier de 1 à 20 et R représente un hydrogène ou un groupe alkyle de 1 à 4 carbones linéaire ou ramifié.

Des exemples de lactones comprennent plus particulièrement les β-, γ-, δ- et ε-lactones saturées ou insaturées, substituées ou non, comportant de 4 à 11 atomes de carbone, telles que l'ε-caprolactone, la δ-valérolactone, la γ-butyrolactone, la δ-caprolactone racémique ou non, la β-butyrolactone, racémique ou non. L'ε-caprolactone est préférée pour une utilisation dans la présente invention.

Par « amorceur », on entend dans la présente description un composé comportant au moins une fonction hydroxyle ou au moins une fonction thiol. L'amorceur peut être de l'eau ou du sulfure d'hydrogène, un composé de faible masse moléculaire comme du pentanol ou du propanethiol , et également un oligomère ou un polymère.
Lorsque l'amorceur est un un oligomère ou un polymère, il peut être mono- ou polyhydroxylé, notamment choisi parmi : les (alcoxy)polyalkylène glycols, tels que le (méthoxy)polyéthylène glycol (MPEG/PEG), le polypropylène glycol (PPG) et le polytétraméthylène glycol (PTMG) ; les poly(alkyl)alkylène adipate diols tels que le poly(2-méthyl-1,3-propylène adipate)diol (PMPA) et le poly(1,4-butylène adipate)diol (PBA) ; les polydiènes éventuellement hydrogénés, α-hydroxylés ou α,ω-dihydroxylés tels que le polybutadiène α, ω -dihydroxylé ou le polyisoprène α, ω-dihydroxylé ; les polyalkylènes mono- ou polyhydroxylés tels que le polyisobutylène mono- ou polyhydroxylé ; les polylactides contenant des fonctions hydroxy terminales ; les polyhydroxyalcanoates tels que le poly(3-hydroxybutyrate) et le poly(3-hydroxyvalérate) ; les polysaccharides et les petits sucres (mono- et oligo-saccharides) modifiés ou non tels que l'amidon, la chitine, le chitosan, le dextran, la cellulose, le saccharose, et l'isomaltulose; et leurs mélanges.
En variante, l'amorceur peut être un oligomère ou un polymère portant une ou plusieurs fonctions thiol, tel que les polystyrènes α-thiolés ou α,ω-thiolés, les poly(méth)acrylates α-thiolés ou α,ω-thiolés, les polybutadiènes α-thiolés ou α,ω-thiolés, et leurs mélanges.

Selon une autre possibilité, l'amorceur peut être un co-oligomère ou un copolymère vinylique de la famille des polymères acryliques, méthacryliques, styréniques ou diéniques, qui résulte d'une co-polymérisation entre des monomères acryliques, méthacryliques, styréniques ou diéniques et des monomères fonctionnels présentant un groupement hydroxyle, tels que des monomères acryliques ou méthacryliques hydroxylés, comme par exemple le 4-hydroxybutyl acrylate, l'hydroxyéthyl acrylate et l'hydroxyéthyl méthacrylate. Cette polymérisation pourra s'effectuer selon un procédé radicalaire conventionnel, un procédé radicalaire contrôlé ou un procédé ionique.

Selon une autre possibilité encore, l'amorceur peut être un copolymère vinylique obtenu par polymérisation radicalaire contrôlée dans laquelle l'amorceur radicalaire et/ou l'agent de contrôle portent au moins une fonction hydroxyle ou thiol.
Les oligomères et polymères utilisé comme amorceurs peuvent avoir, par exemple, une masse moléculaire moyenne en nombre allant de 1.000 à 100.000 g/mol, par exemple de 1.000 à 20.000 g/mol et un indice de polydispersité allant de 1 à 3 et par exemple de 1 à 2,6.

L'utilisation de tels oligomères ou polymères permet d'obtenir des copolymères à blocs linéaires, en étoile ou greffés, selon la disposition de la ou des fonction(s) hydroxyle ou thiol sur l'amorceur oligomérique ou polymérique.

De préférence, le rapport molaire du monomère cyclique à l'amorceur polymérique va de 5 à 500, plus préférentiellement de 10 à 200 et, mieux, de 40 à 100.

Le procédé selon l'invention nécessite l'emploi d'un catalyseur, qui comprend ou est de préférence constitué, d'un composé phosphoré substitué.
le rapport molaire du composé phosphoré substitué, à chaque fonction hydroxyle ou thiol de l'amorceur polymérique est de 1 à 3.

Par composé phosphoré substitué, on se réfère à des composés présentant les structures suivantes :

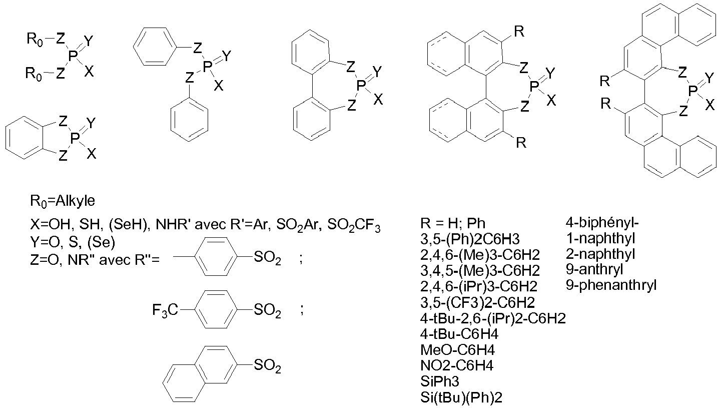

Ces composés peuvent être chiraux ou non chiraux. Dans un mode préféré de l'invention, lorsque le composé phosphoré substitué est chiral, la réaction pourra être stéréocontrolée.

Plus particulièrement, le diphénylphosphate est préféré ainsi que le(*R*)-3,3'-Bis[3,5-bis(trifluorométhyl)phényl]-1,1'-binaphtyl-2,2'-diyl hydrogénophosphate et le N-[(trifluorométhyl)sulfonyl]-,diphénylester de l'acide phosphoramidique.

Il s'agit préférentiellement d'un processus de catalyse homogène, en ce sens que le catalyseur se présente habituellement dans la même phase que les réactifs et non sous forme supportée. Le catalyseur peut être aisément éliminé en fin de réaction par neutralisation à l'aide d'une base organique encombrée puis élimination des sels d'ammonium ainsi formés, de préférence par lavage aqueux. Le procédé selon l'invention ne mette pas en oeuvre d'espèce métallique.

Ce procédé est de préférence conduit à une température allant de 0 à 230°C, plus préférentiellement de 25°C à 105°C et, mieux, de 25°C à 65°C.

Ce procédé est en outre de préférence conduit sous agitation dans un solvant ou en masse. On ne sortirait pas du cadre de l'invention en mettant en oeuvre ce procédé en suspension ou en émulsion dans un solvant adapté. Le procédé de l'invention peut être mis en oeuvre en continu, semi-continu ou de façon discontinue dans un réacteur qui peut être une extrudeuse.

Lors de la mise en oeuvre en continu, l'ensemble des réactifs est introduit en continu à l'entrée du réacteur et les produits de la réaction sont soutirés à la sortie du réacteur.

Lors de la mise en oeuvre en semi-continu, une partie des réactifs peut être introduite en continu, tel que les monomères et/ou le catalyseur.

Lors de la mise en oeuvre en discontinu l'ensemble des réactifs est introduits en même temps dans le réacteur, et les produits de la réaction sont soutirés après le temps nécessaire à la réaction (typiquement de 4 à 10h).

Les (co)polymères préparés selon la présente invention présentent une masse moléculaire moyenne en nombre notée Mn, mesurée par chromatographie par perméation de gel (ou GPC), contrôlée par le rapport molaire du monomère à l'amorceur et qui peut être supérieure à 25.000 g/mol, et/ou un indice de polydispersité, traduisant la bonne homogénéité des longueurs de chaîne du polymère, inférieur à 1,5.

Ils peuvent être utilisés dans une diversité d'applications, et en particulier comme membranes pour le traitement d'effluents liquides ou gazeux ou dans des systèmes électrochimiques de stockage d'énergie tels que des batteries lithium-ion, des supercondensateurs ou des piles à combustibles ; comme matériaux biocompatibles utilisables notamment dans le domaine pharmaceutique ou cosmétique, en particulier pour la fabrication de systèmes de vectorisation d'actifs ou comme matériau de suture ; comme additifs dans les matières plastiques et en particulier comme additifs antistatiques pour des résines polymères comme les polyesters, les polycarbonates, les polyamides ou les poly(meth)acrylates, comme composés améliorant la résistance aux chocs des résines telles que les polycarbonates transparents ou non, les polyesters, les polyamides ou les poly(meth)acrylates, ou comme plastifiants du PVC ; ou encore pour la fabrication de fibres textiles.

L'invention sera maintenant illustrée par les exemples non limitatifs suivants.

### Exemples :

### Exemple 1: Préparation de polylactones

### Exemple 1A :

Une solution d'ε-caprolactone (75 µl, 40 éq., 0, 9 mol.l⁻¹) en dans CDCl₃ (425 µl) avec le pentanol (1,8 µl, 1 éq.) est coulée sur une solution de (R)-3-3'-Bis[3,5-bis(trifluoromethyl)phenyl]-1,1'-binaphtyl-2,2'-diyl hydrogenphosphate (13 mg, 1 éq.). Le milieu réactionnel est agité sous argon à 30°C jusqu'à conversion totale du monomère établie à partir de la RMN, soit 4 h.
Conversion : ≥ 95%
RMN ¹H: DP = 33
GPC : Mₙ = 7.600 g/mol, PDI = 1,09

### Exemple 1B :

A une solution d'ε-caprolactone (1ml, 80 éq., 0,9 mol.l⁻¹) dans le toluène (9 ml), sont ajoutés successivement le n-pentanol (13 µl, 1 éq.) et le diphénylphosphate(85 mg, 3 éq.). Le milieu réactionnel est agité sous argon à 30°C jusqu'à conversion totale du monomère établie à partir de la RMN, soit 3 h.
Conversion : ≥ 95%
RMN ¹H: DP = 76
GPC : Mₙ = 16.000 g/mol, PDI = 1,10

### Exemple 1C :

A une solution d'ε-caprolactone (400µl, 40 éq., 0,9 mol.l⁻¹) dans le toluène (3,6 ml), sont ajoutés successivement le n-pentanol (10 µl, 1 éq.) et le N-[(trifluoromethyl)sulfonyl]-,diphenylester phosphoramidic acid (103 mg, 3 éq.). Le milieu réactionnel est agité sous argon à 30°C jusqu'à conversion totale du monomère établie à partir de la RMN, soit 45min. Un ajout d'ε-caprolactone (400µl, 40éq) est alors effectué dans le milieu. Après conversion totale, 800µl, 80éq sont à nouveau injectés dans le milieu réactionnel. La conversion totale est établie par RMN 3h après le dernier ajout.
Conversion : ≥ 99%
RMN ¹H: DP = 148
GPC : Mₙ = 26.500 g/mol, PDI = 1,11

### Exemple 1D :

A une solution d'ε-caprolactone (400µl, 40 éq., 0,9 mol.l⁻¹) dans le toluène (3,6 ml), est ajouté le N-[(trifluoromethyl)sulfonyl]-,diphenylester phosphoramidic acid (34 mg, 1 éq. Le milieu réactionnel est agité sous argon à 30°C jusqu'à conversion totale du monomère établie à partir de la RMN, soit 6 h.
Conversion : ≥ 99%
RMN ¹H: DP = 140
GPC : Mₙ = 24.000 g/mol, PDI = 1,34

### Exemple 1E :

A une solution d'ε-caprolactone (1ml, 80éq., 0,9 mol.l⁻¹) dans le toluène (9ml), sont ajoutés successivement le n-pentanol (25ul, 1éq.) et le N-[(trifluoromethyl)sulfonyl]-diphénylester phosphoramidic acid (85mg, 3éq.). Le milieu réactionnel est agité sous argon à 30°C jusqu'à conversion totale du monomère établie à partir de la RMN, soit 3h.
Conversion : ≥ 95%
RMN ¹H: DP = 62
GPC : Mₙ = 12.600 g/mol, PDI = 1,11

### Exemple 1F : Polymérisation en continu

A une solution d'ε-caprolactone (250µl, 10éq., 0,9 mol.l⁻¹) dans le toluène (2,25ml), sont ajoutés successivement le n-pentanol (25ul, 1éq.) et le diphénylphosphate (56mg, 1éq.). Le milieu réactionnel est agité sous argon à 30°C. Une solution d'ε-caprolactone (1,75ml, 70éq., 0,9 mol.l⁻¹) dans le toluène (17,25ml) est ajoutée en continu à un débit de 0,03ml/min pendant 10h. La conversion totale du monomère est établie à partir de la RMN 30 minutes après la fin de l'ajout, soit 10h30.
Conversion : ≥ 95%
RMN ¹H: DP = 59
GPC : Mₙ = 12.100 g/mol, PDI = 1,06

### Exemple 1G : Polymérisation en continu

A une solution d'ε-caprolactone (250µl, 10éq., 0,9 mol.l⁻¹) dans le toluène (2,25ml), sont ajoutés successivement le n-pentanol (25ul, 1éq.) et le N-[(trifluoromethyl)sulfonyl]-diphénylester phosphoramidic acid (90mg, 1éq.) Le milieu réactionnel est agité sous argon à 30°C. Une solution d'ε-caprolactone (1,75ml, 70éq., 0,9 mol.l⁻¹) dans le toluène (17,25ml) est ajoutée en continu à un débit de 0,06ml/min pendant 5h. La conversion totale du monomère est établie à partir de la RMN 15 minutes après la fin de l'ajout, soit 5h15.
Conversion : ≥ 95%
RMN ¹H: DP = 68
GPC : Mₙ = 13.700 g/mol, PDI = 1,09

### Exemple 2 : Préparation de polylactones à haute température

### Exemple 2A :

A une solution d'ε-caprolactone (1 ml, 80 éq., 0,9 mol.l⁻¹) dans le toluène (9 ml), sont ajoutés successivement le n-pentanol (13 µl, 1 éq.) et le diphénylphosphate(85 mg, 3 éq.). Le milieu réactionnel est agité sous argon à 80°C jusqu'à conversion totale du monomère établie à partir de la RMN, soit 1 h30.
Conversion : ≥ 95%
RMN ¹H: DP = 80
GPC : Mₙ = 16.000 g/mol, PDI = 1,11

### Exemple 2B :

A une solution d'ε-caprolactone (1ml, 80éq., 0,9 mol.l⁻¹) dans le toluène (9ml), sont ajoutés successivement le n-pentanol (25ul, 1éq.) et le N-[(trifluoromethyl)sulfonyl]-diphénylester phosphoramidic acid (85mg, 1éq.). Le milieu réactionnel est agité sous argon à 80°C jusqu'à conversion totale du monomère établie à partir de la RMN, soit 5h.
Conversion : 100%
RMN ¹H: DP = 67
GPC : Mₙ = 13.950 g/mol, PDI = 1,14

### Exemple 3 : Préparation de copolymères à base de polylactones

A une solution d'ε-caprolactone (400µl, 40 éq., 0,9 mol.l⁻¹) dans le toluène (3,6 ml), sont ajoutés successivement le polyéthylèneglycol (*M*ₙ = 2.000, IP = 1,06) (75mg, 1 éq.) et le N-[(trifluoromethyl)sulfonyl]-,diphenylester phosphoramidic acid (34 mg, 1 éq.). Le milieu réactionnel est agité sous argon à 30°C jusqu'à conversion totale du monomère établie à partir de la RMN, soit 1h30.
Conversion : ≥ 99%
GPC : Mₙ = 6.500 g/mol, PDI = 1,13

## Revendications

1. Procédé de préparation d'un copolymère d'au moins un monomère cyclique choisi parmi les lactones comprenant l'étape consistant à faire réagir le ou les monomère(s) cyclique(s) en présence d'un composé phosphoré substitué choisi parmis les composés suivants, le procédé ne mettant pas en oeuvre d'espèce métallique:

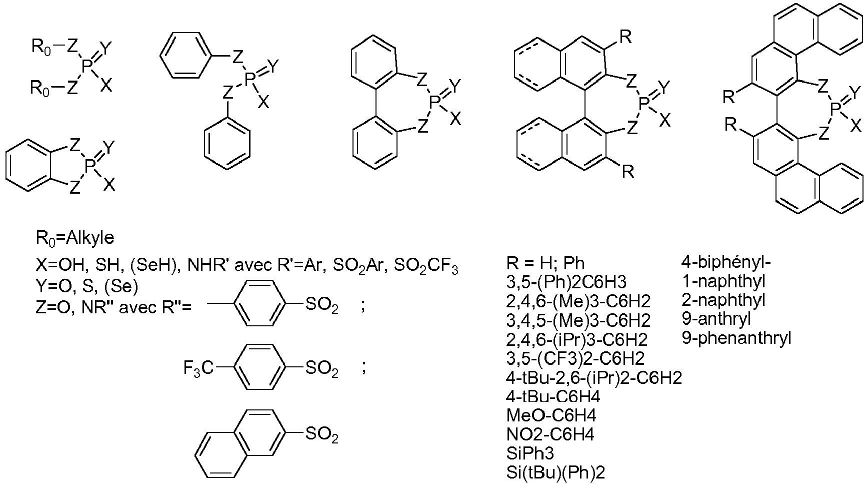

2. Procédé selon la revendication 1 dans lequel on utilise un amorceur.

3. Procédé selon la revendication 1 ou 2, **caractérisé en ce que** la lactone est choisie parmi les β-, γ-, δ- et ε-lactones saturées ou insaturées, substituées ou non, comportant de 4 à 11 atomes de carbone, telles que l'ε-caprolactone, la δ-valérolactone, la β-butyrolactone, racémique ou non, la δ-caprolactone racémique ou non et la γ-butyrolactone.

4. Procédé selon la revendication 3, **caractérisé en ce que** la lactone est l'ε-caprolactone.

5. Procédé selon l'une quelconque des revendications 2 à 4, **caractérisé en ce que** l'amorceur est une petite molécule, comme l'eau, le pentanol ou un polymère comportant au moins une fonction hydroxyle.

6. Procédé selon la revendication 5, **caractérisé en ce que** l'amorceur polymérique est un oligomère ou un polymère mono- ou polyhydroxylé, choisi parmi : les (alcoxy)polyalkylène glycols ; les poly(alkyl)alkylène adipate diols ; les polydiènes éventuellement hydrogénés, α-hydroxylés ou α,ω-dihydroxylés ; les polyalkylènes mono- ou polyhydroxylés ; les polylactides contenant des fonctions hydroxy terminales ; les polyhydroxyalcanoates ; les polysaccharides et les petits sucres (mono- et oligo-saccharides)modifiés ou non; et leurs mélanges.

7. Procédé selon la revendication 5, **caractérisé en ce que** le polymère comportant au moins une fonction hydroxyle est choisi parmi le (méthoxy)polyéthylène glycol, le polypropylène glycol, le polytétraméthylène glycol, le poly(2-méthyl-1,3-propylène adipate)diol, le poly(1,4-butylène adipate)diol, le polybutadiène α, ω-dihydroxylé, le polyisoprène α, ω-dihydroxylé, le polyisobutylène mono- ou polyhydroxylé, le poly(3-hydroxybutyrate), le poly (3-hydroxyvalérate), l'amidon, la chitine, le chitosan, le dextran, la cellulose, le saccharose, et l'isomaltulose et leurs mélanges.

8. Procédé selon l'une quelconque des revendications 2 à 4, **caractérisé en ce que** l'amorceur polymérique est un polymère comportant au moins une fonction thiol.

9. Procédé selon la revendication 8, **caractérisé en ce que** l'amorceur polymérique est choisi parmi : les polystyrènes α-thiolés ou α,ω-thiolés, les poly(méth)acrylates α-thiolés ou α,ω-thiolés, les polybutadiènes α-thiolés ou α,ω-thiolés, et leurs mélanges.

10. Procédé selon l'une quelconque des revendications 2 à 7, **caractérisé en ce que** l'amorceur polymérique est un co-oligomère ou un copolymère vinylique de la famille des polymères acryliques, méthacryliques, styréniques ou diéniques, qui résulte d'une co-polymérisation entre des monomères acryliques, méthacryliques, styréniques ou diéniques et des monomères fonctionnels présentant soit un groupement hydroxyle, soit un groupement thiol.

11. Procédé selon les revendications 1 à 10, **caractérisé en ce que** le composé phosphoré substitué *est* le diphénylphosphate.

12. Procédé selon les revendications 1 à 10, **caractérisé en ce que** le composé phosphoré substitué est le (*R*)-3,3'-Bis[3,5-bis(trifluorométhyl)phényl]-1,1'-binaphtyl-2,2'-diyl hydrogénophosphate.

13. Procédé selon les revendications 1 à 10, **caractérisé en ce que** le composé phosphoré substitué est le N-[(trifluorométhyl)sulfonyl]-,diphénylester de l'acide phosphoramidique.

14. Procédé selon l'une quelconque des revendications 1 à 13, **caractérisé en ce que** le rapport molaire du monomère cyclique à l'amorceur polymérique va de 5 à 500, de préférence de 10 à 200 et plus préférentiellement de 40 à 100.

15. Procédé selon l'une quelconque des revendications 2 à 14, **caractérisé en ce que** le rapport molaire du composé phosphoré substitué, à chaque fonction hydroxyle ou thiol de l'amorceur polymérique est de 1 à 3.

16. Procédé selon l'une quelconque des revendications 1 à 15, **caractérisé en ce qu'**il est mis en oeuvre à une température allant de 0°C à 230°C.

17. Composition de polymère susceptible d'être obtenue suivant le procédé selon l'une quelconque des revendications 1 à 16.

18. Utilisation de la composition selon la revendication 17 comme additif antistatique, comme additif améliorant la résistance aux chocs des résines ou comme plastifiant du PVC.

## Patentansprüche

1. Verfahren zur Herstellung eines Copolymers aus mindestens einem cyclischen Monomer, das aus Lactonen ausgewählt ist, bei dem man das cyclische Monomer bzw. die cyclischen Monomere in Gegenwart einer aus den folgenden Verbindungen ausgewählten substituierten Phosphorverbindung umsetzt, wobei bei dem Verfahren keine Metallspezies eingesetzt wird:

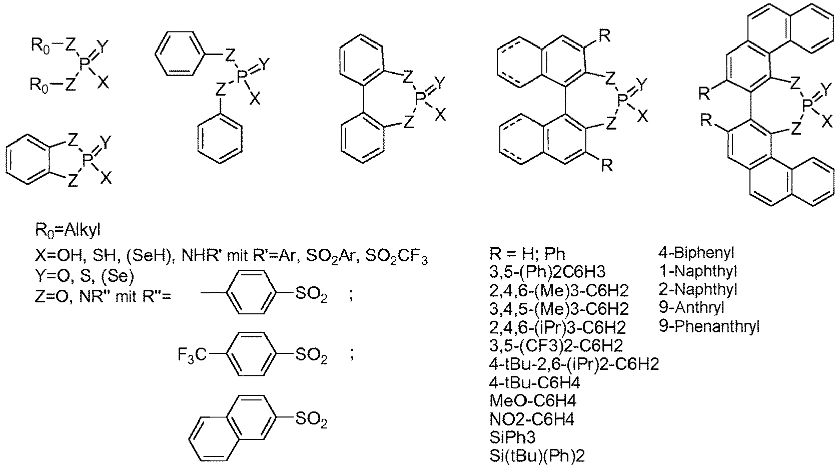

2. Verfahren nach Anspruch 1, bei dem man einen Initiator verwendet.

3. Verfahren nach Anspruch 1 oder 2, **dadurch gekennzeichnet, dass** das Lacton aus gesättigten oder ungesättigten, substituierten oder unsubstituierten β-, γ-, 5- und ε-Lactonen mit 4 bis 11 Kohlenstoffatomen, wie ε-Caprolacton, δ-Valerolacton, racemischem oder nicht racemischem β-Butyrolacton, racemischem oder nicht racemischem 5-Caprolacton und γ-Butyrolacton ausgewählt ist.

4. Verfahren nach Anspruch 3, **dadurch gekennzeichnet, dass** es sich bei dem Lacton um ε-Caprolacton handelt.

5. Verfahren nach einem der Ansprüche 2 bis 4, **dadurch gekennzeichnet, dass** es sich bei dem Initiator um ein kleines Molekül, wie Wasser oder Pentanol, oder ein Polymer mit mindestens einer Hydroxylfunktion handelt.

6. Verfahren nach Anspruch 5, **dadurch gekennzeichnet, dass** es sich bei dem polymeren Initiator um ein mono- oder polyhydroxyliertes Oligomer oder Polymer handelt, das aus (Alkoxy)polyalkylenglykolen; Poly(alkyl)alkylenadipatdiolen; gegebenenfalls hydrierten, α-hydroxylierten oder α, ω-dihydroxylierten Polydienen; mono- oder polyhydroxylierten Polyalkylenen; Polylactiden mit endständigen Hydroxylfunktionen; Polyhydroxyalkanoaten; Polysacchariden und kleinen Zuckern (Mono- und Oligosacchariden), die gegebenenfalls modifiziert sind; und Mischungen davon ausgewählt ist.

7. Verfahren nach Anspruch 5, **dadurch gekennzeichnet, dass** das Polymer mit mindestens einer Hydroxylfunktion aus (Methoxy)polyethylenglykol, Polypropylenglykol, Polytetramethylenglykol, Poly(2-methyl-1,3-propylenadipat)diol, Poly(1,4-butylen-adipat)diol, α,ω-dihydroxyliertem Polybutadien, α,ω-dihydroxyliertem Polyisopren, mono- oder polyhydroxyliertem Polyisobutylen, Poly(3-hydroxy-butyrat), Poly(3-hydroxyvalerat), Stärke, Chitin, Chitosan, Dextran, Cellulose, Saccharose und Isomaltulose und Mischungen davon ausgewählt ist.

8. Verfahren nach einem der Ansprüche 2 bis 4, **dadurch gekennzeichnet, dass** es sich bei dem polymeren Initiator um ein Polymer mit mindestens einer Thiolfunktion handelt.

9. Verfahren nach Anspruch 8, **dadurch gekennzeichnet, dass** der polymere Initiator aus α-thiolierten oder α,ω-thiolierten Polystyrolen, α-thiolierten oder α, ω-thiolierten Poly(meth)acrylaten, α-thiolierten oder α,ω-thiolierten Polybutadienen und Mischungen davon ausgewählt ist.

10. Verfahren nach einem der Ansprüche 2 bis 7, **dadurch gekennzeichnet, dass** es sich bei dem polymeren Initiator um ein Vinyl-Cooligomer oder -Copolymer aus der Familie der Acryl-, Methacryl-, Styrol- oder Dien-Polymere handelt, das sich aus der Copolymerisation von Acryl-, Methacryl-, Styrol- oder Dien-Monomeren und funktionellen Monomeren mit einer Hydroxylgruppe oder einer Thiolgruppe ergibt.

11. Verfahren nach den Ansprüchen 1 bis 10, **dadurch gekennzeichnet, dass** es sich bei der substituierten Phosphorverbindung um Diphenylphosphat handelt.

12. Verfahren nach den Ansprüchen 1 bis 10, **dadurch gekennzeichnet, dass** es sich bei der substituierten Phosphorverbindung um (*R*)-3,3'-Bis[3,5-bis(trifluormethyl)phenyl]-1,1'-binaphthyl-2,2'-diylhydrogenphosphat handelt.

13. Verfahren nach den Ansprüchen 1 bis 10, **dadurch gekennzeichnet, dass** es sich bei der substituierten Phosphorverbindung um N-[(Trifluormethyl)-sulfonyl]phosphoramidsäurediphenylester handelt.

14. Verfahren nach einem der Ansprüche 1 bis 13, **dadurch gekennzeichnet, dass** das Molverhältnis von cyclischem Monomer zu polymerem Initiator im Bereich von 5 bis 500, vorzugsweise von 10 bis 200 und weiter bevorzugt von 40 bis 100 liegt.

15. Verfahren nach einem der Ansprüche 2 bis 14, **dadurch gekennzeichnet, dass** das Molverhältnis von substituierter Phosphorverbindung zu jeder Hydroxyl- oder Thiolfunktion des polymeren Initiators 1 bis 3 beträgt.

16. Verfahren nach einem der Ansprüche 1 bis 15, **dadurch gekennzeichnet, dass** es bei einer Temperatur im Bereich von 0 °C bis 230 °C durchgeführt wird.

17. Polymerzusammensetzung, die gemäß dem Verfahren nach einem der Ansprüche 1 bis 16 erhältlich ist.

18. Verwendung der Zusammensetzung nach Anspruch 17 als Antistatikadditiv, als Additiv zur Verbesserung der Schlagzähigkeit von Harzen oder als Weichmacher für PVC.

## Claims

1. Method for preparing a copolymer from at least one cyclic monomer selected from lactones a carbonate, a lactide and a glycolide, an oxazoline, comprising the step consisting of reacting the cyclic monomer or monomers in the presence of a substituted phosphorus-containing compound selected from the following compounds, the method not employing metallic species:

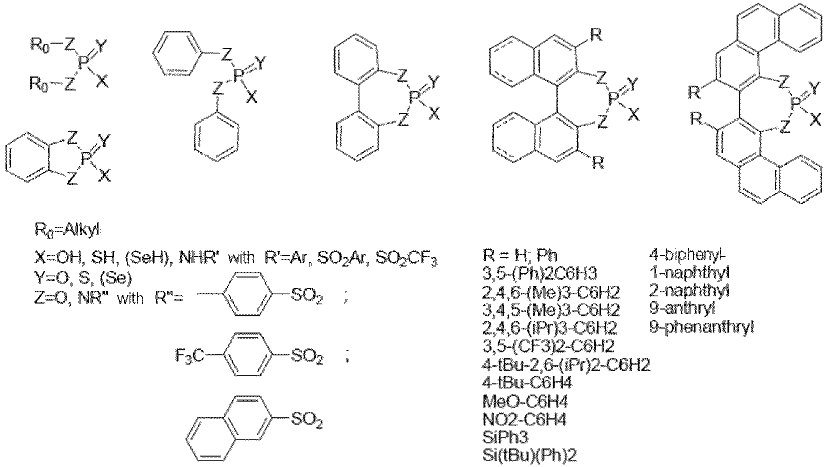

2. Method according to Claim 1, wherein an initiator is used.

3. Method according to Claim 1 or 2, **characterized in that** the lactone is selected from saturated or unsaturated, substituted or unsubstituted β-, γ-, and ε-lactones, having from 4 to 11 carbon atoms, such as ε-caprolactone, δ-valerolactone, racemic or nonracemic β-butyrolactone, racemic or nonracemic δ-caprolactone, and γ-butyrolactone.

4. Method according to Claim 3, **characterized in that** the lactone is ε-caprolactone.

5. Method according to any one of Claims 2 to 4, **characterized in that** the initiator is a small molecule, such as water, pentanol or a polymer bearing at least one hydroxyl function.

6. Method according to Claim 4, **characterized in that** the polymeric initiator is a mono- or polyhydroxylated oligomer or polymer, selected from: (alkoxy)polyalkylene glycols; poly(alkyl)alkylene adipate diols; optionally hydrogenated, α-hydroxylated or α,ω-dihydroxylated polydienes; mono- or polyhydroxylated polyalkylenes; polylactides containing terminal hydroxyl functions; polyhydroxyalkanoates; polysaccharides and small sugars (mono- and oligo-saccharides), modified or unmodified; and mixtures thereof.

7. Method according to Claim 5, **characterized in that** the polymer bearing at least one hydroxyl function is selected from (methoxy)polyethylene glycol, polypropylene glycol, polytetramethylene glycol, poly(2-methyl-1,3-propylene adipate)diol, poly(1,4-butylene adipate)diol, polybutadiene α,ω-dihydroxylated, polyisoprene α,ω-dihydroxylated, mono- or polyhydroxylated polyisobutylene, poly(3-hydroxybutyrate), poly(3-hydroxyvalerate), starch, chitin, chitosan, dextran, cellulose, sucrose, and isomaltulose and mixtures thereof.

8. Method according to any one of Claims 2 to 4, **characterized in that** the polymeric initiator is a polymer bearing at least one thiol function.

9. Method according to Claim 8, **characterized in that** the polymeric initiator is selected from: α-thiolated or α,ω-thiolated polystyrenes, α-thiolated or α,ω-thiolated poly(meth)acrylates, α-thiolated or α,ω-thiolated polybutadienes, and mixtures thereof.

10. Method according to any one of Claims 2 to 7, **characterized in that** the polymeric initiator is a vinyl co-oligomer or copolymer from the family of acrylic, methacrylic, styrene or diene polymers, resulting from copolymerization between acrylic, methacrylic, styrene or diene monomers and functional monomers having either a hydroxyl group, or a thiol group.

11. Method according to Claims 1 to 10, **characterized in that** the substituted phosphorus-containing compound is diphenylphosphate.

12. Method according to Claims 1 to 10, **characterized in that** the substituted phosphorus-containing compound is (*R*)-3,3'-bis[3,5-bis(trifluoromethyl)phenyl]-1,1'-binaphthyl-2,2'-diyl hydrogen phosphate.

13. Method according to Claims 1 to 10, **characterized in that** the substituted phosphorus-containing compound is N-[(trifluoromethyl)sulfonyl]-,diphenyl ester of phosphoramidic acid.

14. Method according to any one of Claims 1 to 13, **characterized in that** the molar ratio of the cyclic monomer to the polymeric initiator is in the range from 5 to 500, preferably from 10 to 200 and more preferably from 40 to 100.

15. Method according to any one of Claims 2 to 14, **characterized in that** the molar ratio of the substituted phosphorus-containing compound to each hydroxyl or thiol function of the polymeric initiator is from 1 to 3.

16. Method according to any one of Claims 1 to 15, **characterized in that** it is carried out at a temperature in the range from 0°C at 230°C.

17. Composition of polymer obtainable by the method according to any one of Claims 1 to 16.

18. Use of the composition according to Claim 17 as an antistatic additive, as an additive for improving the impact toughness of resins or as a plasticizer of PVC.
